# EUROPEAN PATENT SPECIFICATION

(11) **EP 2 992 280 B1**
(45) Date of publication and mention of the grant of the patent: **23.08.2023**
(21) Application number: 14731034.6
(22) Date of filing: 30.04.2014
(51) Int. Cl.: F25D 3/00, B60H 1/32, F28D 20/02, B60H 1/00, F28D 7/06, F28D 20/00, B60P 3/20, F28F 21/08

(54) **APPARATUS FOR PRESERVING, TRANSPORTING AND DISTRIBUTING REFRIGERATED OR FROZEN PRODUCTS, PARTICULARLY FOR THERMALLY INSULATED COMPARTMENTS OF REFRIGERATION VEHICLES, REFRIGERATION CHAMBERS OR THE LIKE**
VORRICHTUNG ZUM KONSERVIEREN, TRANSPORTIEREN UND VERTEILEN GEKÜHLTER UND GEFRORENER PRODUKTE, INSBESONDERE FÜR THERMISCH ISOLIERTE ABTEILUNGEN VON KÜHLFAHRZEUGEN, KÜHLKAMMERN ODER DERGLEICHEN
APPAREIL DE CONSERVATION, DE TRANSPORTATION, ET DE DISTRIBUTION DES PRODUITS REFRIGÉRÉS OU SURGELÉS, EN PARTICULIER POUR COMPARTIMENTS ISOLÉS THERMIQUEMENT DES VÉHICULES DE RÉFRIGÉRATION, CHAMBRES FROIDES OU ANALOGUES

(30) Priority: 02.05.2013 IT MI20130715
(43) Date of publication of application: 09.03.2016
(73) Proprietor: SMART COLD TECHNOLOGIES S.R.L., 20121 Milano (IT)
(72) Inventor: GHIRALDI, Alberto, 6994 ARANNO (IT)
(74) Representative: Modiano, Micaela Nadia
(86) International application number: PCT/IB2014/061117
(87) International publication number: WO 2014/178015

(56) References cited:
- EP-A1- 1 236 960
- EP-A2- 0 206 429
- EP-A2- 0 839 679
- EP-A2- 0 839 679
- EP-A2- 1 632 739
- EP-A2- 1 712 855
- US-A- 2 859 945
- US-A1- 2006 117 788

## Description

The present invention relates to an apparatus for preserving, transporting and distributing refrigerated or frozen products, particularly for thermally insulated compartments of refrigerated vans, refrigeration chambers or the like.

The transport and distribution of perishable goods, in particular of foods, require the maintenance of temperatures in accordance with the ATP rules and in particular with Class A, for products designated "fresh", with temperatures that, in relation to the type and mode of transport or distribution, are comprised between 0°C and +4°C or between 0°C and +7°C, and with Class C, with temperatures below -18°C, for products designated "frozen".

Currently, in order to control the temperature inside means of transport of the above mentioned perishable goods, two alternatives are adopted: installing eutectic plates in the refrigerated compartment, or using refrigeration apparatuses that are powered by the engine of the means of transport or are provided with an independent Diesel generator.

The use of eutectic plates in refrigerated compartments of means of transport has drawbacks which derive from the intrinsic characteristics of the technologies used, which include:
a) the eutectic solutions used are salinic;
b) they are corrosive and are not compatible with aluminum, which requires the use of carbon steel or stainless steel, which have a typical thermal conductivity of 45 W/m°C and a specific weight of 7.9 ton/m³ compared with a thermal conductivity of 221 W/m°C and a specific weight of 2.7 ton/m³ for aluminum, with a consequent increase in weight and reduction in thermal conductivity, and the impossibility of providing ribbed surfaces both on the air side and on the heat exchange fluid side;
c) it is impossible to control the temperature inside the means of transport, with consequent overuse of capacity at the start of the trip, and it is impossible to respond proportionally to thermic loads;
d) they are complex and laborious to install inside the refrigerated compartment in that they are characterized by a plurality of elements that require complex and expensive piping as well as a structure incorporated in the isothermic case which is such as to allow the fixing of the plates themselves, which typically line the entire ceiling and end wall;
e) they are characterized by instability over time, with a tendency to degradation owing to the separation of the components of the solutions used and, owing to the impossibility of replacing those solutions, it is necessary to replace the plates in their entirety;
f) they cannot be used in cold climates, where it is necessary to heat the compartment of the means of transport since the outside temperatures fall to well below 0°C, in order to maintain the positive temperatures that are necessary for the preservation of "fresh" products;
g) they become progressively covered in frost, with consequent reduction of efficiency and increase of the tare weight and, not being equipped with means of defrosting, they thus require the vehicle to be shut down for periods of between 24 hours and 72 hours in order to defrost the plates.

With regard to the use of refrigerating apparatuses powered by the engine of the vehicle, or by an independent diesel generator, the main drawbacks relate to:
a) high energy consumption and consequent pollution owing to the production of CO₂;
b) noise;
c) progressive formation of ice in the evaporators and consequent fall in efficiency in the event of frequent opening of the doors;
d) "lack of cold" if the vehicle is parked, in vehicles lacking an independent generator;
e) they require complex and laborious installation, as well as expensive and continual maintenance at specialist centers.

The aim of the present invention is to provide an apparatus for preserving, transporting and distributing refrigerated or frozen products, particularly for thermally insulated compartments of refrigeration vehicles or the like, that solves the above technical problem, compensates for the drawbacks and overcomes the intrinsic limitations of the known art, by making it possible to:
a) transport "fresh" or "frozen" perishable products with high standards of assurance, reliability and energy efficiency;
b) have low operation and maintenance costs;
c) have low environmental impact;
d) transport "fresh" or "frozen" products both in hot climates and in extremely cold climates where it is necessary to heat the isothermic case in order to prevent the deterioration of the fresh product owing to the low temperatures outside;
e) be easily and rapidly defrosted using the necessary technical stops and without extraordinary shutdown of the vehicle;
f) simplify, accelerate and reduce the costs of installation thereof in a refrigerated compartment of a van;
g) optimize the processes of heat exchange, as a result considerably increasing thermic efficiency and reducing energy expenditure.

Relevant prior art can be found in EP1236960A.

This aim and these and other objects which will become better apparent hereinafter are all achieved by an apparatus for preserving, transporting and distributing refrigerated or frozen products, particularly for thermally insulated compartments of refrigeration vehicles, refrigeration chambers or the like, according to claim 1.

Further characteristics and advantages of the invention will become better apparent from the description of three preferred, but not exclusive, embodiments of an apparatus for preserving refrigerated or frozen products, particularly for compartments of refrigerated vans or the like, which are illustrated by way of non-limiting example with the aid of the accompanying drawings wherein:
Figure 1 is a front elevation view of a first embodiment of an apparatus for preserving refrigerated or frozen products, according to the invention, arranged inside a refrigerated compartment;
Figure 2 is a side view of a refrigerated compartment, inside which is arranged the apparatus in Figure 1, according to the invention;
Figure 3 is a side view of the apparatus in Figure 1, according to the invention, arranged inside the refrigerated compartment;
Figure 4 is a front elevation view of a heat accumulation element that makes up the apparatus in Figure 1;
Figure 5 is a side view of the heat accumulation element in Figure 4;
Figure 6 is a plan view from above of the heat accumulation element in Figure 4;
Figure 7 is a sectional view of the heat accumulation element shown in Figure 4, taken along the line VII-VII;
Figure 8 is a front elevation view of a second embodiment of an apparatus for preserving refrigerated or frozen products, according to the invention, arranged inside a refrigerated compartment;
Figure 9 is a side view of the apparatus in Figure 8, according to the invention, arranged inside the refrigerated compartment;
Figure 10 is a front elevation view of a heat accumulation element that makes up the apparatus in Figure 8;
Figure 11 is a side view of the heat accumulation element in Figure 10;
Figure 12 is a plan view from below of the heat accumulation element in Figure 10;
Figure 13 is a sectional view of the heat accumulation element shown in Figure 12, taken along the line XIII-XIII;
Figure 14 is a front elevation view of a third embodiment of an apparatus for preserving refrigerated or frozen products, according to the invention, arranged inside a refrigerated compartment;
Figure 15 is a side view of the apparatus in Figure 14, according to the invention, arranged inside the refrigerated compartment;
Figure 16 is a sectional view of the apparatus shown in Figure 14, taken along the line XVI-XVI;
Figure 17 is a front elevation view of a heat accumulation element that makes up the apparatus in Figure 14;
Figure 18 is a side view of the heat accumulation element in Figure 17;
Figure 19 is a plan view from above of the heat accumulation element in Figure 17;
Figure 20 is a sectional view of the heat accumulation element shown in Figure 19, taken along the line X-X.

With reference to the figures, the apparatus for preserving refrigerated or frozen products, particularly for thermally insulated compartments of refrigeration vehicles, refrigeration chambers or the like, generally designated by the reference numeral 1, comprises one or more heat accumulation elements 3, each comprising an enclosure 5 that delimits a cavity 7 adapted to contain a heat accumulation liquid. The cavity 7 accommodates a heat exchanger 9 that can be supplied with a heat exchange fluid.

According to the invention, the enclosure 5 has a first wall 11 that has a substantially flat surface and a second wall 13, arranged opposite to the first wall 11, that has an at least partially ribbed surface. According to the invention, furthermore, the enclosure 5 comprises ventilation means 15 associated with the heat accumulation elements 3.

The cavity 7 of each heat accumulation element 3 accommodates a heat exchanger 9 provided advantageously with a U-shaped double tubular profile 90, within which a heat transfer fluid, or heat exchange fluid, flows. The heat exchanger 9 is immersed in a heat accumulation liquid and is adapted to cool, or as needed even heat, such heat accumulation liquid.

The U-shaped tubular profile 90 advantageously has an outer surface 91, in contact with the heat accumulation liquid, which is substantially smooth, and an inner surface 92, in contact with the heat exchange fluid, which comprises a plurality of ribs, in order to facilitate the heat exchange. The U-shaped double tubular profile 90 according to the invention comprises a flat structure 93, which connects, also thermally, the two portions, ascending and descending, of the tubular elements that define the U-shaped profile. Such flat structure 93, immersed in the heat accumulation liquid, has a ratio between the surface on the accumulation liquid side and the surface on the heat exchange fluid side that is correlated to the respective transfer coefficients. Furthermore, according to the invention, such flat structure 93 has ends 95 that are adapted to be inserted into adapted guides 94 that are provided in the inner surface of the enclosure 5, for the installation of the heat exchanger 9 inside the enclosure 5 of the heat accumulation element 3.

The heat accumulation liquid can be selected from the following group:
- hydrogen peroxide at concentrations comprised between 1.5% and 6%;
- hydrogen peroxide at concentrations comprised between 25% and 35%;
- n-decane.

In particular, hydrogen peroxide at concentrations comprised between 1.5% and 6%, i.e. from 5 to 20 volumes, has a solid/liquid transition temperature substantially comprised in the range between -1°C and -6°C, and is therefore suitable for use for preserving "fresh" products.

Hydrogen peroxide at concentrations comprised between 25% and 35%, i.e. from 80 to 116 volumes, has a solid/liquid transition temperature substantially comprised in the range between -25°C and -32°C, and is therefore suitable for use for preserving "frozen" products, since it complies with Class C of the ATP Agreement.

N-decane has a solid/liquid transition temperature of around -29.5°C and is therefore suitable for use for preserving "frozen" products.

Specifically, hydrogen peroxide in concentrations comprised between 1.5% and 10% is advantageously stabilized and characterized by a release of oxygen of less than 3% of the oxygen content per year, which is equivalent to less than 90 liters of O₂ for every 200 liters of heat accumulation liquid, or 90/365 of a liter per day, which is an infinitesimal fraction of the volume of a means of transport using heat accumulators of such dimensions which, typically, has a volume greater than 10 m³.

Similarly, hydrogen peroxide in concentrations comprised between 25% and 35% is characterized by a release of oxygen of less than 3% of the oxygen content per year, which is equivalent to less than 270 liters of O₂ for every 200 liters of heat accumulation liquid, or 270/365 of a liter per day, which is an infinitesimal fraction of the volume of a vehicle using heat accumulators of such dimensions which, typically, has a volume greater than 10 m³.

The above mentioned heat accumulation liquids are not inflammable in the configuration used by the invention, they are compatible with aluminum, they are approved for use in indirect contact with foods, they are ecological, and they are highly stable.

The enclosure 5 of each heat accumulation element 3, as the thermal exchanger 9, can be advantageously made of aluminum, for example by way of extrusion. In fact the above mentioned heat accumulation liquids that fill the cavity 7 of the enclosure 5 are not corrosive to aluminum, as the saline solutions used in conventional eutectic plates are. Aluminum furthermore, with respect to other types of materials, has a thermal conductivity of 221 W/m°C and a specific weight of 2.7 ton/m³, with respect to the thermal conductivity of 45 W/m°C and specific weight of 7.9 ton/m³ of steel, or the thermal conductivity of 0.1 W/m°C and specific weight of 1.1 ton/m³ of plastic materials.

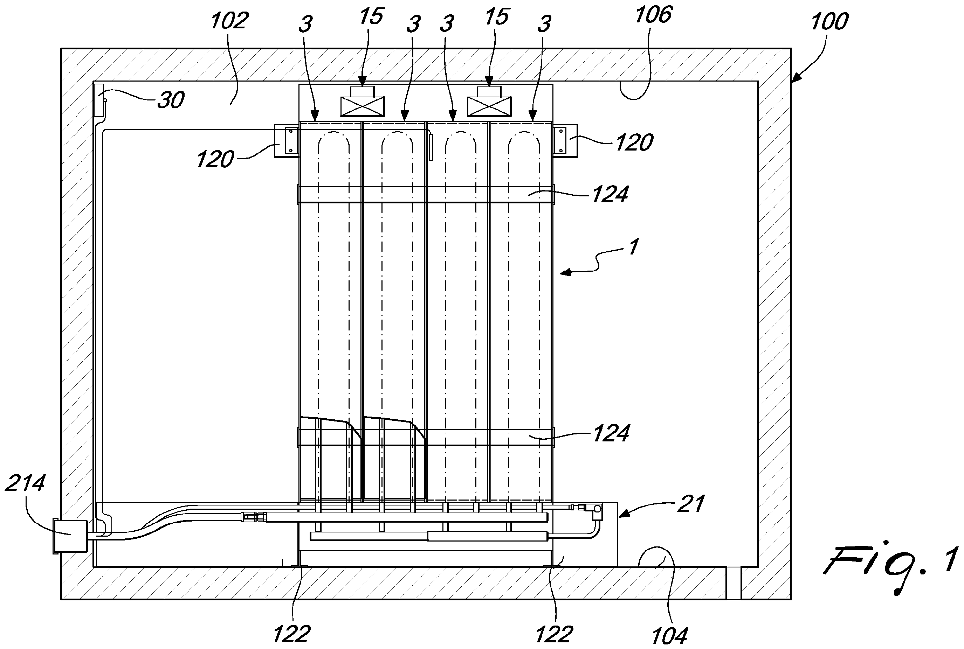

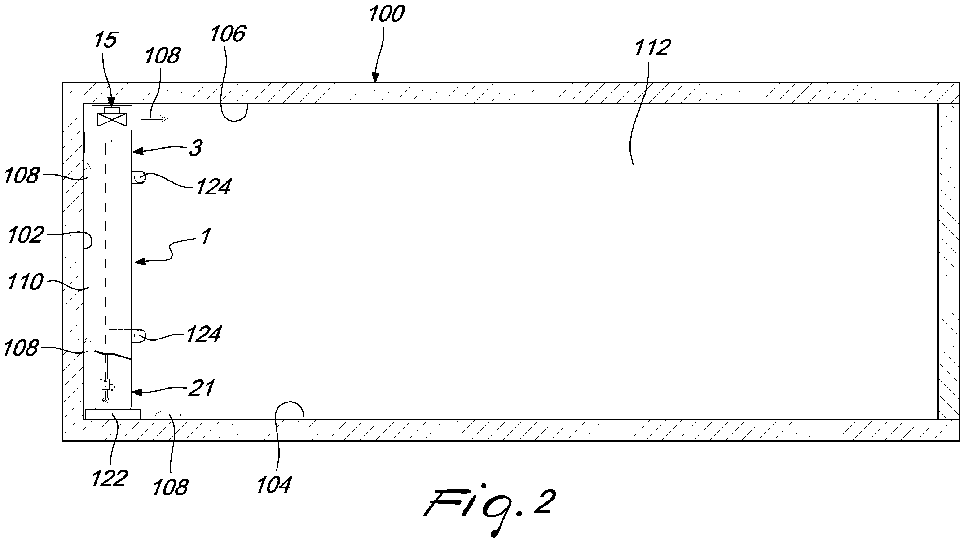

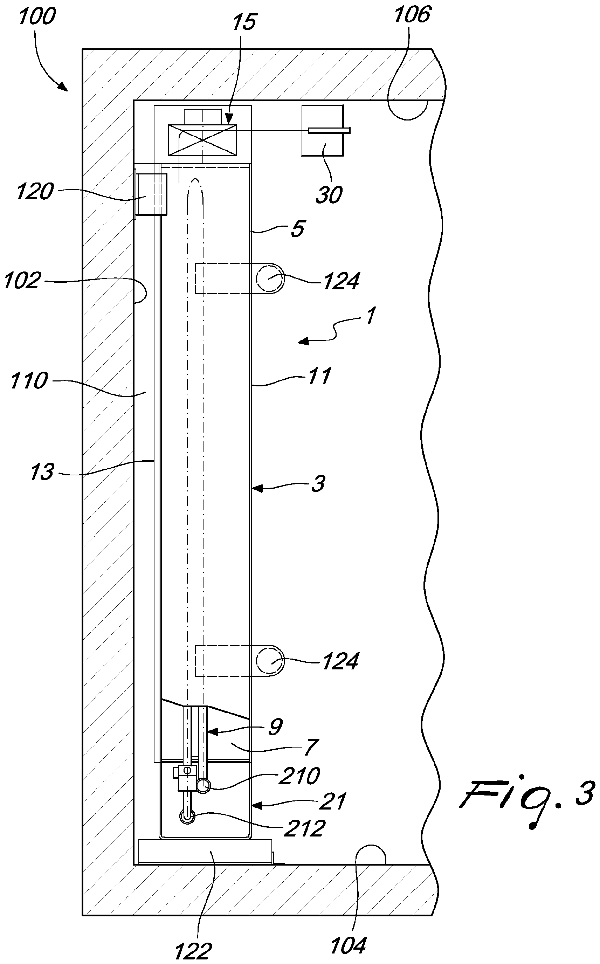

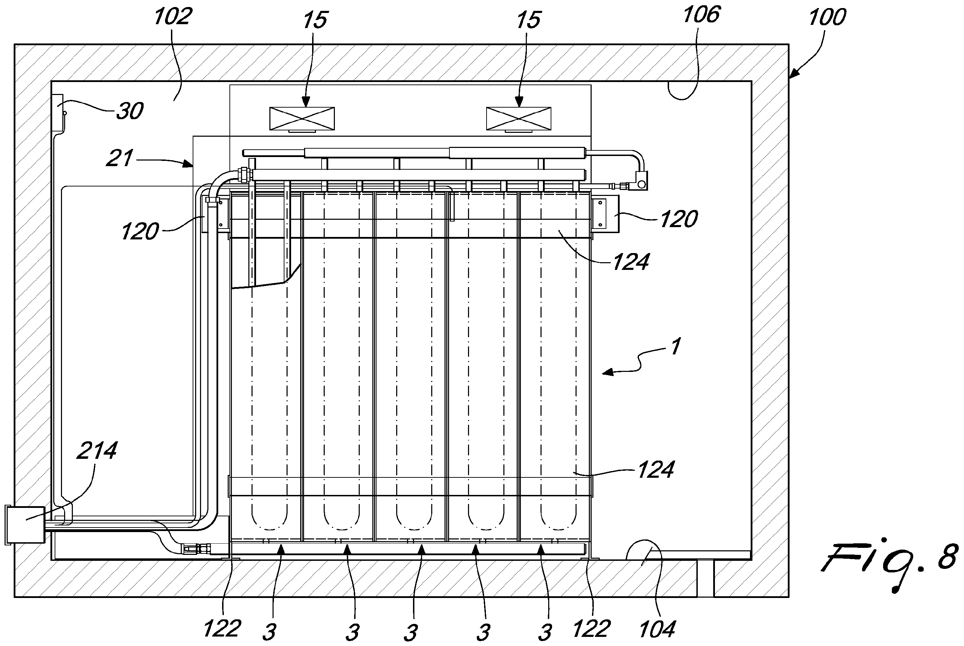

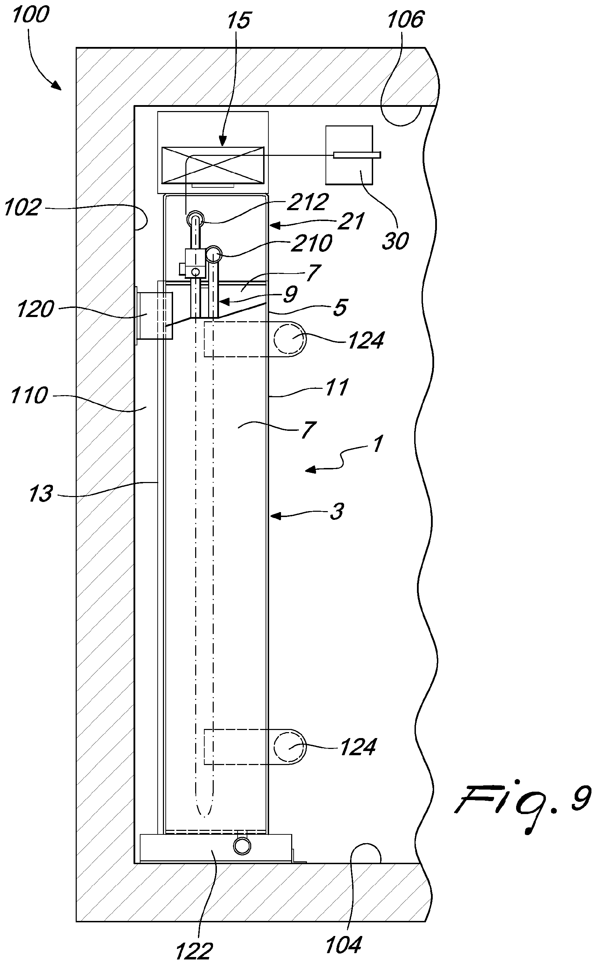

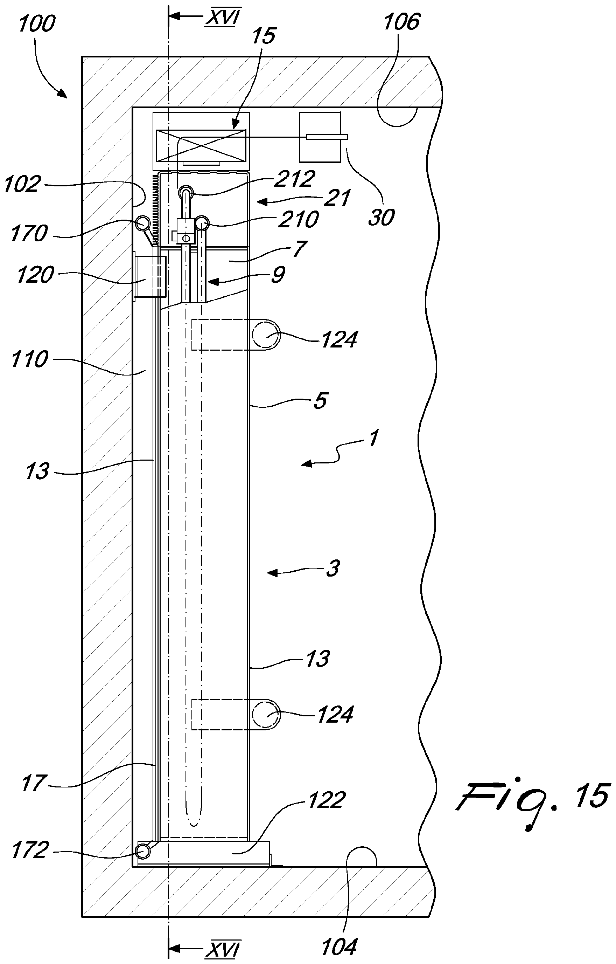

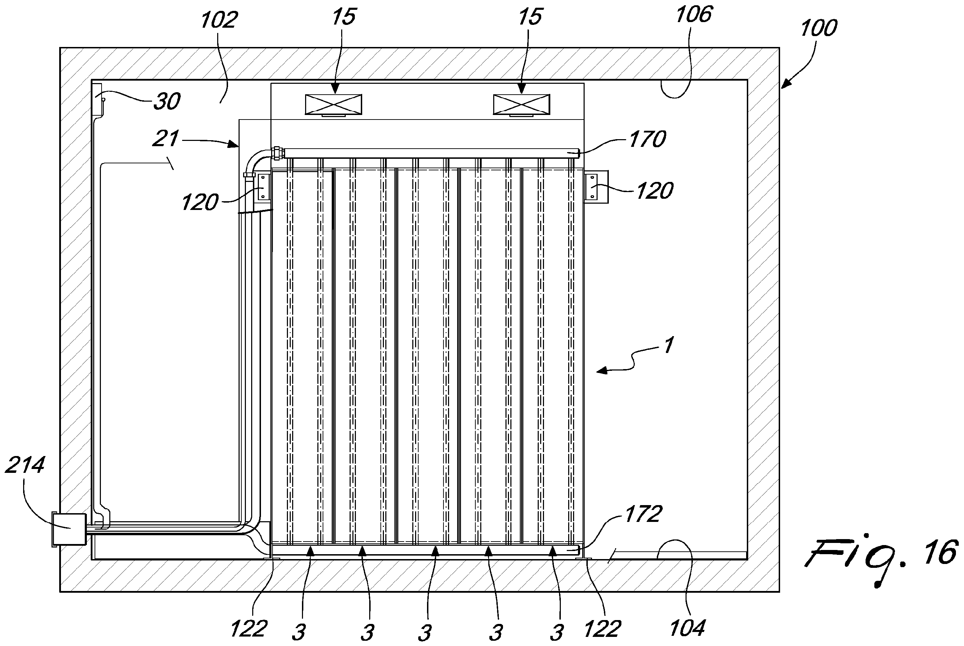

Figures 1 to 3, and also Figures 8 and 9, and Figures 14 to 16, show a compartment of a refrigerated van 100, which comprises the apparatus 1 for preserving refrigerated or frozen products. The apparatus 1 is arranged adjacent to the back wall 102 of the compartment 100, spaced from the back wall 102, and raised from the walking surface 104 of the compartment 100. The ventilation means 15 are arranged at the top of the apparatus 1 proximate to the ceiling 106 of the compartment 100. The second wall 13, i.e. the wall of the enclosure 5 which is provided with an at least partially ribbed surface, is directed toward the back wall 102, while the first wall 11, i.e. the wall provided with a substantially flat surface, is directed toward the internal space 112 of the compartment 100, where the goods are stored. The ventilation means 15 are advantageously adapted to generate an air flow, designated by the arrows 108, which passes between the walking surface 104 and the apparatus 1, enters the interspace 110 that is created between the apparatus 1 and the back wall 102 of the compartment 100, flowing over the second wall 13, and in particular the at least partially ribbed surface, and passes through the ventilation means 15 in order to then be distributed in the internal space 112 of the compartment 100.

In particular, the wall 11 with substantially flat surface is adapted to exchange heat by natural convection. The wall 13, with an at least partially ribbed surface, instead forms together with the back wall 102 of the compartment 100 a channel for the forced, modulated and controlled passage of a flow of air generated by the ventilation means 15, thus facilitating the heat exchange.

Advantageously, the distance between the back wall 102 and the wall 13 of the heat accumulation element 3 is comprised between 4 and 10 centimeters.

The power of the ventilation means 15 can advantageously be controlled, so as to be able to modulate the speed of the flow of air 108 that passes through them, in a range comprised between 0 and 12 meters per second. Controlling the speed of the flow of air passing along the interspace 110 makes it possible to control the extent of the heat exchange between the air in forced circulation and the wall 13 provided with an at least partially ribbed surface. The ventilation means 15 comprise advantageously one or more DC-powered fans.

The apparatus 1 can comprise a temperature sensor 30 in order to measure the temperature inside the compartment 100, and as a consequence act on the ventilation means 15 in order to increase or reduce the forced circulation of air and thus increase or reduce the heat exchange between the apparatus 1 and the internal space 112 of the compartment 100.

Optimization of the use of the heat energy accumulated in the apparatus 1 is achieved by way of the interaction between two factors, i.e.:
- the modulation of the air flow forced into the interspace between the apparatus 1 and the back wall 102, and
- the thermal conductivity characteristic of the apparatus 1 itself, which is designed so that the ratio of the heat exchange capacity of the flat surface with respect to the ribbed surface can be varied from a ratio of 1:2 to a ratio of 1:100.

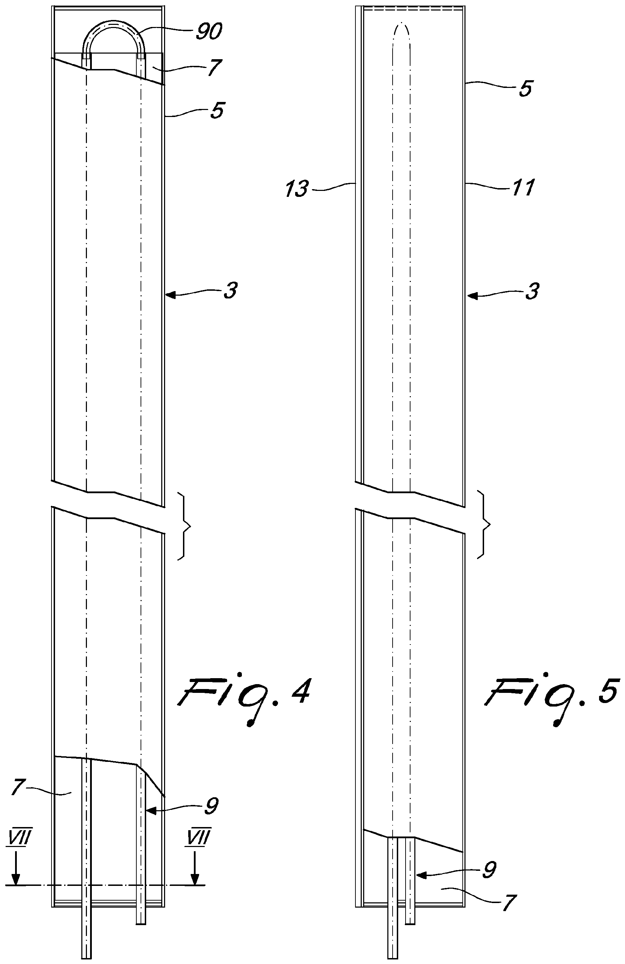

The apparatus 1 advantageously comprises a protective container body 21 that contains and protects the hydraulic connections for the heat exchangers 9 of each heat accumulation element 3. The hydraulic connections of each heat accumulation element 3 comprise an entry connection 210 for the delivery of the heat exchange fluid, gas or liquid, and an exit connection 212, for the outflow of the heat exchange fluid. Inside the protective container body 21, the entry connection 210 and exit connection 212 of each heat accumulation element 3 are connected respectively to two separate ducts that are accessible from the outside of the compartment 100 by way of an external connector 214, for the connection of a thermal charger, or refrigeration/heating group, such as a compressor powered by AC or DC. According to the first embodiment of the apparatus 1, illustrated in Figures 1 to 7, the heat accumulation elements 3 are arranged with the hydraulic connections 210 and 212 of the heat exchangers elements 9 in a lower region. In fact the protective container body 21 is arranged underneath the group of heat accumulation elements 3.

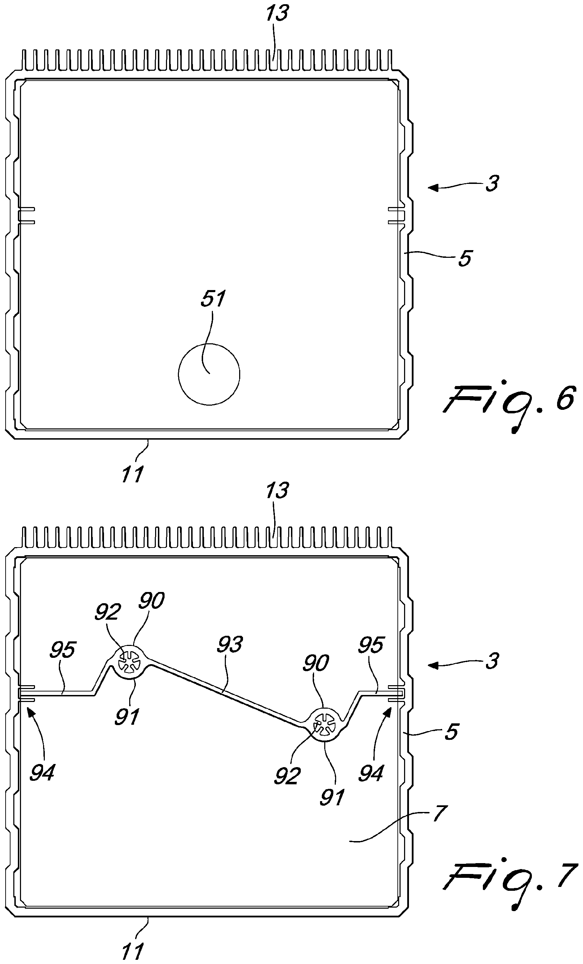

According to such embodiment, the enclosure 5 of each heat accumulation element advantageously comprises, at the top, a hole 51 that can be closed, visible in Figure 6, for the insertion and refilling, in the event of substitution, of the heat accumulation liquid, which also makes it possible to change the refrigeration class of the vehicle, passing for example from Class C to Class A when the deterioration of the isothermic structure of the vehicle itself rules out the possibility of renewing the ATP certification in the original class.

Such arrangement with the hydraulic connections in a downward region is preferable when a heat accumulation liquid is used which, during the change of phase from liquid to solid, tends to expand, in that, in this manner, the risks are reduced of pockets being created inside the enclosure 5 of heat accumulation liquid in the liquid phase which, by not being able to drain away thanks to a correct freezing sequence, freeze later on, thus creating critical/destructive pressure points. In other words, supplying the heat accumulation liquid from one side only, and from the lower side thereof, makes it possible to achieve a sequence of freezing the heat accumulation liquid such that the progressive freezing occurs uniformly upward from below and from the center toward the sides so as to allow the sliding upward of the part in the liquid phase, thus preventing the formation of inclusions of liquid which, by freezing later on, would create destructive pressure points. Furthermore, in order to further prevent such risks and avoid uncontrolled increases in pressure, a free expansion volume will be left inside the enclosure 5, in a range comprised between 5% and 15% of the volume occupied by the heat accumulation liquid. An additional contrivance consists in applying a venting valve to the top of the enclosure 5, which is capable of releasing the overpressure owing to dilation during change of phase, or owing to the oxygen released over time by the hydrogen peroxide.

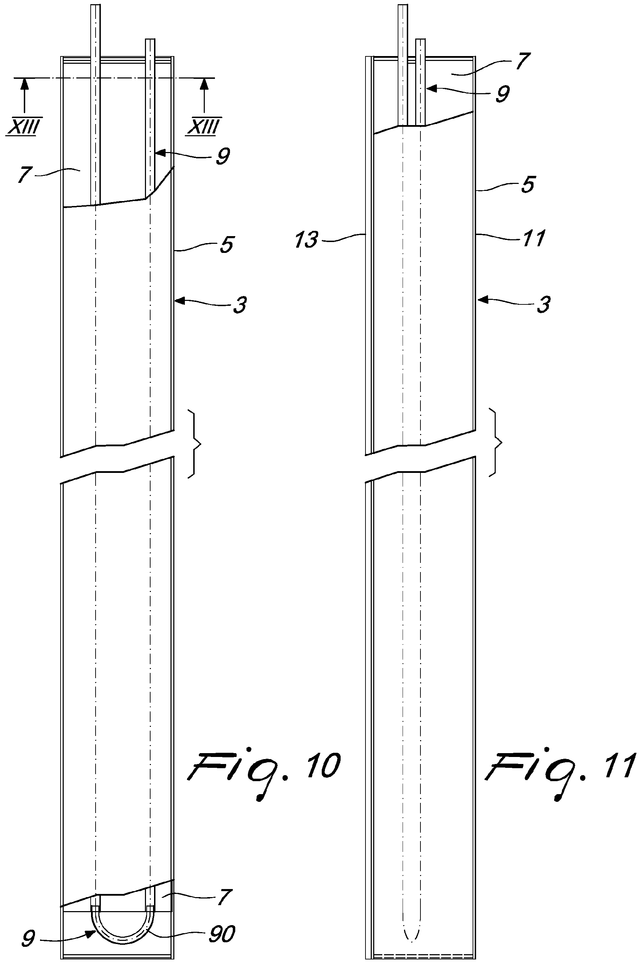

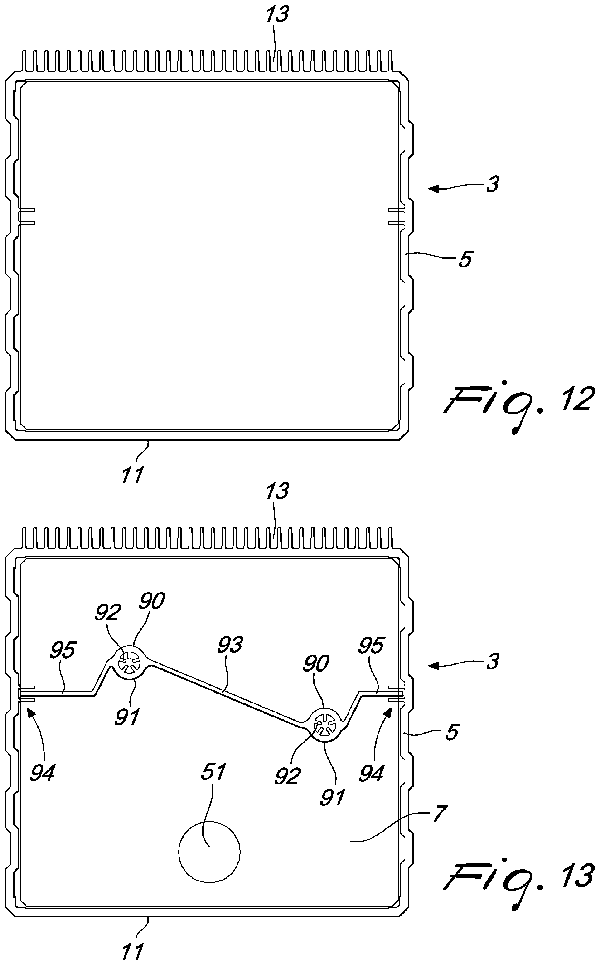

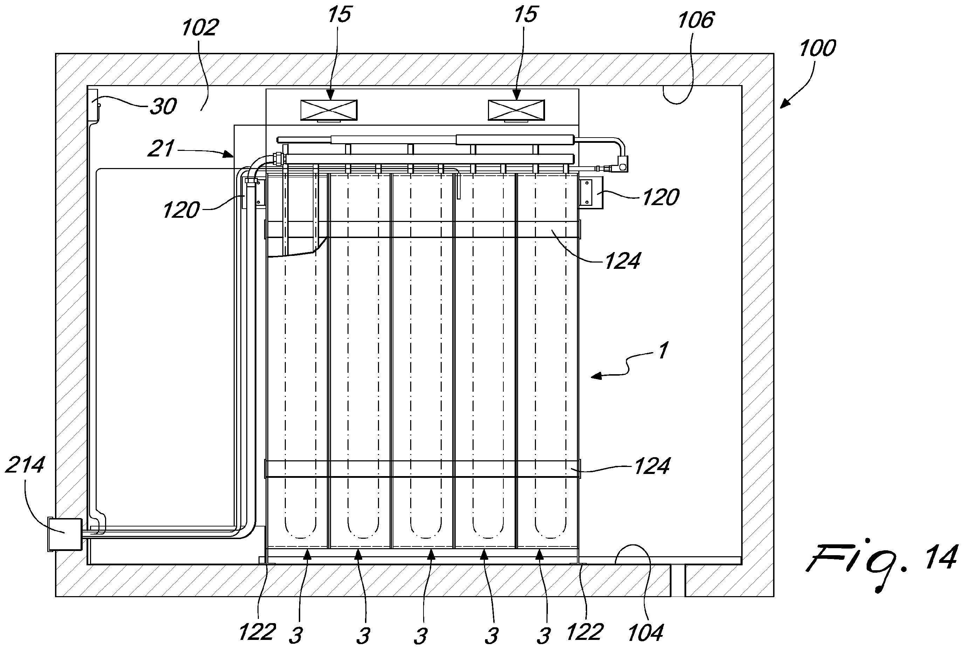

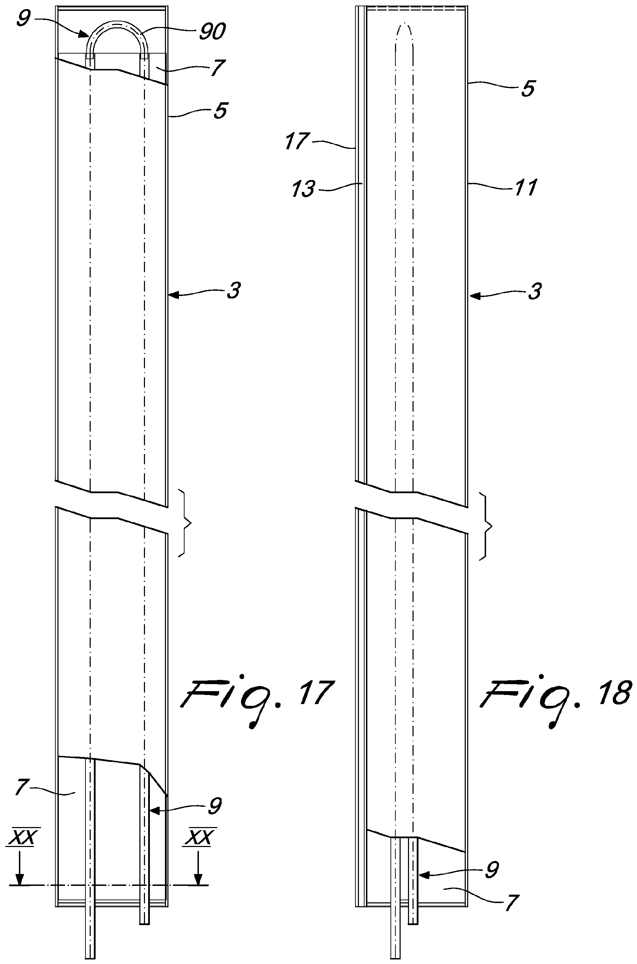

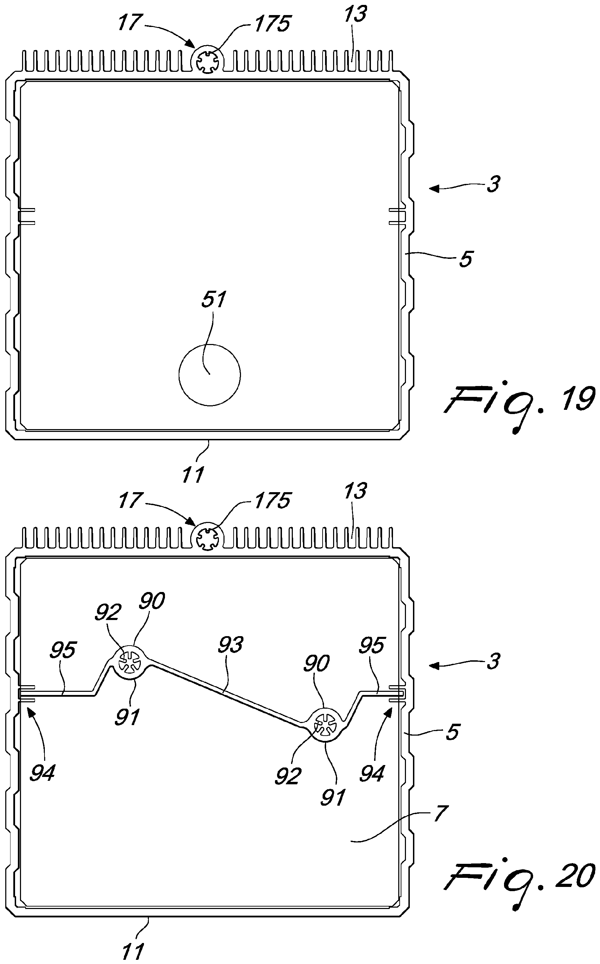

In the second embodiment, illustrated in Figures 8 to 13 and in the third embodiment, illustrated in Figures 14 to 20, the heat accumulation elements 3 are arranged with the hydraulic connections 210 and 212 of the circuit of the heat exchanger 9 in an upward region, and the protective container body 21 is also arranged at the top of the apparatus 1. Such arrangement is preferable when a heat accumulation liquid is used that contracts during the liquid/solid change of phase. Consistently with the first embodiment of the apparatus 1, as well as in the second and in the third embodiment, the closeable hole 51 is also provided at the top of the enclosure 5.

In all the embodiments shown of the apparatus 1, fixing elements 120 are advantageously provided for fixing the apparatus 1 to the back wall 102 of the compartment, and elements 122 for supporting the apparatus 1 on the walking surface 104, so that the apparatus remains raised from such surface. The apparatus 1 advantageously further comprises protection bars 124, which face toward the internal space 112 of the compartment 100, in order to prevent the movement of the goods in the compartment 100 from damaging the apparatus 1 itself.

As shown in Figures 14 to 20, with regard to the third embodiment of the apparatus 1, the enclosure 5 of each heat accumulation element 3 comprises a passage duct 17 of a heating fluid, which is associated with one or both of the first wall 11, substantially flat, and the second wall 13, with an at least partially ribbed surface, of the enclosure 5. Advantageously, such passage duct 17 is associated with the second wall 13. The heating fluid is advantageously adapted to heat the wall of the enclosure 5, thus enabling the defrosting thereof rapidly and efficiently. Such passage duct 17 forms part of a defrosting circuit which comprises an upper hydraulic line 170, a lower hydraulic line 172, and is accessible from the outside of the compartment 100, by way of the external connector 214. In order to facilitate the exchange of heat between the heating liquid and the heat-conducting material that forms the passage duct 17, the inner surface of the passage duct 17 can have inner ribs 175.

The external connector 214 can thus comprise several types of connection, all advantageously quick-fit, for the connection of, for example, the thermal charger circuit and therefore for the introduction of the heat exchange fluid, or for the connection of the defrosting circuit and therefore for the introduction of the heating fluid. Such external connector 214 can further comprise connections of the electrical type for connection with the temperature sensor 30 and with the ventilation means 15, for the purposes of monitoring such electrical peripherals.

The thermal charger can comprise a refrigeration compressor and corresponding accessories, and is capable of:
- refrigerating the heat exchange fluid to the required temperature in order to obtain the change of phase of the heat accumulation liquid, typically at temperatures of -5/-15°C for the Class A version and -15/-40°C for the Class C version;
- pumping and circulating the fluid inside the heat accumulators through the circuit it is connected to by way of the quick-fit couplings for delivery and outflow;
- heating the fluid for rapid thawing, pumping it and making it circulate until the surface of the heat accumulators is defrosted;
- heating the accumulation liquid for the Class A version to operate in winter climate conditions.

Advantageously, the apparatus 1 can comprise, in a modular manner, as many heat accumulation elements 3 as necessary, based on the size of the compartment 100 and based on the required thermal performance levels.

Operation of the apparatus for preserving refrigerated or frozen products is described below.

If the outside temperature is higher than the refrigeration or freezing temperature required inside the compartment 100 of the refrigerated van, the apparatus 1 is connected, by way of the external connector 214, to a thermal charger that is capable of bringing the heat exchange fluid, liquid or gaseous, to the right temperature and making it circulate inside the heat exchanger 9. The heat exchange fluid brings the heat accumulation liquid present in the cavity 7 of the enclosure 5 of each heat accumulation element 3 to a lower temperature than the characteristic solid/liquid transition temperature. During this step of loading the heat accumulation liquid, the doors of the compartment 100 can be open for the loading/unloading of the goods to be transported. When the thermal charge has been completed and the heat accumulation liquid has reached the preset temperature that ensures the complete change of phase of the liquid itself, the thermal charger is disconnected and the transport and distribution of the goods can be carried out, opening the doors of the compartment 100 when necessary. The thermal charger consists advantageously of a compressor powered by AC or DC, and can be stand-alone, or fitted on the van, and is capable, for the preset configuration, of carrying out the thermal charge functions for the Class A and Class C versions, heating of Class A vehicles for use in particularly cold climates, fast defrosting of Class C versions, and even lowering the temperature of the loaded products to levels that are non-optimal or in violation of regulations.

Advantageously, if required, it is possible to activate the defrosting of the apparatus 1, by making a heating fluid flow through the passage duct 17 which, in a sufficiently short time is such as to not permit the exceeding of the temperature specified by regulations that apply to the products inside the compartment 100. The circulation of the heating fluid, inside the passage duct 17, makes it possible to melt the layer of ice deposited on the wall of the apparatus very quickly. In particular, thanks to the high thermal conductivity of aluminum and the high temperature of the heating fluid, it is possible to rapidly defrost the enclosure 5 by affecting, i.e. by melting, only a very thin layer of the heat accumulation liquid in direct contact with the aluminum walls of the enclosure. In other words, the interaction between the high thermal capacity of the heat accumulation liquid, the high thermal conductivity of aluminum, and the high temperature of the heating fluid enable defrosting in times such as to not exceed the temperature specified by the regulations that apply inside the compartment 100. The heating fluid can be a liquid or a pressurized gas.

If the temperature outside is lower than the temperature specified by the regulations applicable to fresh products and in particular Class A of the ATP Agreement, then the thermal charger can also be used to heat the heat accumulation liquid to temperatures of up to 90°C, which will, using the sensible heat accumulated, maintain the desired temperature inside the compartment 100 of the refrigerated van, during the transport and distribution of the goods.

As mentioned previously, the apparatus 1 makes it possible to control the exchanges of heat with the internal space 112 of the compartment 100, where the goods are stored.

In particular, the wall 11 of the enclosure 5 directed toward the internal space 112 has a flat surface, while the wall 13, directed toward the back wall 102 of the compartment 100, is at least partially ribbed, with a "heat exchange surface"/"space occupation surface" ratio of from 2:1 to 6:1. The total heat exchange thus is also a function of the heat exchange coefficient owing to the speed of the flow of air, and therefore can be comprised in a range that goes from 2 W/m²K, for natural convection, up to 25 W/m²K, for forced ventilation. It follows from this that the ratio between the heat exchange capacities of the wall 11, with a substantially flat surface, and of the wall 13, with an at least partially ribbed surface, can vary from a ratio of 1:2 to a ratio of 1:100.

By specifically taking advantage of such technical characteristic, it is possible to obtain the following advantages:
1) ability to thermally charge the heat accumulation liquid completely without damaging "fresh" products owing to excessive temporary and/or localized cooling of the internal space 112 of the compartment 110;
2) optimization of the use of the heat energy preserved in the heat accumulation elements 3;
3) possibility of using the apparatus 1 even in very cold climates, by inverting the thermal gradients of operation of the apparatus 1.

Below are some examples to illustrate some aspects of the operation of the apparatus 1.

Assume that the means of transport is a 7.5-ton Class A refrigerated van, used for the transport and distribution of "fresh" products. The heat exchange surface toward the outside of the refrigerated compartment of such van is approximately 37 m², while the heat exchange coefficient thereof is 0.45 W/m²K. The heat conductance of such compartment therefore amounts to approximately 16.5 W/K.

Assume that the van is fitted with an apparatus 1 for preserving refrigerated or frozen products, according to the invention, with the following characteristics:
- the wall 11, with a flat surface, which is directed toward the internal space of the refrigerated compartment, has an area of approximately 0.8 m², and a heat exchange coefficient equal to 2 W/m²K.
- the wall 13, with an at least partially ribbed surface, has an area of approximately 2.5 m², and a heat exchange coefficient that, under conditions of maximum ventilation, can reach 25 W/m²K.

Starting from such data, we arrive at a heat conductance of the wall 11 with the flat surface of approximately 1.6 W/K, and a heat conductance of the wall 13, with an at least partially ribbed surface, that can reach 62.5 W/K.

Now, when preserving "fresh" products, during the step of cooling the heat accumulation liquid, i.e. when the ventilation means 15 are inactive, it is possible to bring the heat accumulation liquid to temperatures much lower than the temperature of 1°C required for the preservation of fresh products, for example to temperatures of -9°C, since the reduced heat conductance of the flat surface (1.6 W/K) with respect to the heat conductance of the compartment (16.5 W/K) will not lead to an excessive cooling of the compartment itself, thus preventing damage to the "fresh" product. Furthermore, and this applies both to the above mentioned Class A van for transporting "fresh" products and also to Class C vans for transporting "frozen" products at temperatures of -18°C, the fact that the heat conductance of the wall 11 with a flat surface is only 1.6 W/K, and the heat conductance of the wall 13, with an at least partially ribbed surface, instead can be varied from very low values up to values of over 60 W/K, in regimes of forced ventilation at high speeds and with ribbing with extensive heat exchange surfaces, makes it possible to optimize the absorption of heat from the internal space 112 of the compartment. In this manner, for example for "frozen" products, the temperature of the heat accumulation liquid tends to remain at around, for example, -30°C, while the temperature specified by the applicable regulations must be lower than -18°C/-20°C, and therefore the heat exchange can be modulated as a function of the ambient temperature or of the frequency of opening the doors, with a consequent significant energy saving with respect to continuously maintaining the temperature at -30°C.

The apparatus 1 also lends itself to being used for preserving "fresh" products, i.e. products that must be kept at a temperature of at least 1°C, in very cold countries, where the temperature falls to below -10°C and can reach temperatures as low as -50°C.

In particular, the heat accumulation liquid can be heated up to temperatures of 90°C. In the example given above of the Class A van, the wall 11, with a flat surface, is capable of transmitting up to 142 W of power, in terms of heat, which is obtained by multiplying the heat conductance value of 1.6 W/K by the jump in temperature of 89 C° (which is obtained by subtracting the desired temperature of 1°C inside the van compartment from the temperature of 90°C of the heat accumulation liquid).

Starting from such calorific power of 142 W, the wall 11, with flat surfaces, is capable on its own of maintaining the temperature inside at around 1°C for outside temperatures of up to approximately -8°C.

If the temperature outside should fall to below -8°C, it will be possible to activate the ventilation means 15, and thus heat the internal space 112 of the compartment in order to keep it at the desired temperature of 1°C.

Furthermore, considering the high heat conductance of the wall 13, with an at least partially ribbed surface (up to 62.5 W/K), a temperature of the heat accumulation liquid of around 15°C would be sufficient to maintain the temperature at 1°C inside the refrigerated compartment, with temperatures outside at -50°C.

The heat accumulation fluid, according to a preferred embodiment of present invention, furthermore has the following advantageous characteristics:
- it is compatible with aluminum;
- it has a high enthalpy of fusion and a high sensible heat,
- it can be used as a heat accumulator both during a transition phase and in the liquid phase;
- it has a phase transition temperature that makes it possible to use it as a heat filter that absorbs the variations in temperature generated by the heat exchanger 9, so that the goods inside the compartment 100 will not be damaged.

The fact that aluminum can be used as the material for making both the enclosure 5 of the heat accumulation elements 3, and the heat exchanger 9, in addition to ensuring better thermal performance, is advantageous in that aluminum is easier to work with in order to obtain extrusions of various different shapes, and in particular ribbing of the wall 13 with the most suitable shape and dimensions.

In particular, the apparatus for preserving, transporting and distributing refrigerated or frozen products 1 ensures a high energy efficiency level obtained from the interaction between the heat exchange over 90% of which is obtained on the side of the heat exchanger 9 directed toward the back wall 102 of the compartment 100, which makes it possible to optimize the use of the accumulated heat energy as a function of the thermal loads, and provides the ability to adjust the temperature inside using the ventilation means 15 adapted to deliver air flows between the heat exchanger 9 and the back wall 102 with speeds that can vary within a range of from 0 meters per second to 12 meters per second, thus making it possible to keep the temperature inside at an optimal level independently of the point of change of phase of the heat accumulation liquid, without generating needlessly high thermal flows between the external environment and the thermally isolated compartment, and in such a way as to allow the use of refrigerant fluids at the closest possible temperature to the point of change of phase and therefore optimize the COP (Coefficient Of Performance) of the compressors of the thermal charger assembly.

Furthermore, the temperature of change of phase of the heat accumulation liquid used for fresh products is advantageously such that the formation of frost that occurs on the heat accumulators during charging melts during transport and therefore periodic defrosting is not necessary.

In practice it has been found that the apparatus for preserving refrigerated or frozen products, particularly for thermally insulated compartments of refrigeration vehicles, refrigeration chambers or the like, according to the present invention, achieves the intended aim and objects in that it makes it possible to transport "fresh" or "frozen" perishable products with high standards of economic competitiveness, assurance, reliability, energy efficiency and reduced environmental impact.

In particular the above mentioned apparatus has the following advantages:
a) the ability to control and vary the heat exchange makes it possible to modulate the operation of the apparatus based on the various different thermal loads deriving from the different outside environmental conditions or from the different conditions of use such as the number and duration of the openings of the doors, and the temperature and metabolic heat of the goods preserved inside the refrigerated compartment, the result being a drastic reduction in thermal consumption, and therefore electricity consumption, and the reduction in tare weight for the same thermal autonomy;
b) the fact that it can be used both in hot climates and in extremely cold climates, both for preserving "fresh" products and for preserving "frozen" products. In fact, in particularly cold climates, where there is a risk of damaging "fresh" products by using temperatures that are too low, it is possible to invert the cooling cycle, taking advantage of the sensible heat of the heat accumulation liquid to compensate any excessive falls in temperature inside the refrigerated compartment;
c) it has on average a longer life than the life of the refrigerated van where it is installed;
d) it can be easily and rapidly installed in a refrigerated van, without requiring specialist refrigeration system technicians with associated refrigeration equipment such as vacuum pumps, dosing systems for the gas charge, equipment for making gas-tight welds etc., thanks to the monolithic configuration which enables the complete preassembly of the system including the gas charge and the setting up of the refrigeration connections by way of quick-fit couplings and the electrical connections by way of connectors;
e) it does not require complex, heavy and thermally-conducting fixing structures embedded in the insulating structure of the vehicle, in that the monolithic structure of the invention and its installation beside the end wall make it possible to have the weight supported by the floor, requiring a simple wall support that is compatible with the structural characteristics of ordinary insulating structures; in this manner, differently from, for example, eutectic plates applied to the ceiling of the refrigerated compartment, the center of gravity of the vehicle is not raised, thus making it more stable and safer.

The apparatus for preserving refrigerated or frozen products, particularly for compartments of refrigerated vans or the like, thus conceived is susceptible of numerous modifications and variations all of which are within the scope of the appended claims.

In practice the materials employed, provided they are compatible with the specific use, and the contingent dimensions and shapes, may be any according to requirements.

Where the technical features mentioned in any claim are followed by reference numerals and/or signs, those reference numerals and/or signs have been included for the sole purpose of increasing the intelligibility of the claims and accordingly, such reference numerals and/or signs do not have any limiting effect on the interpretation of each element identified by way of example by such reference numerals and/or signs.

## Claims

1. An apparatus for preserving, transporting and distributing refrigerated or frozen products (1), particularly for thermally insulated compartments of refrigeration vehicles, refrigeration chambers or the like, comprising one or more heat accumulation elements (3), each comprising an enclosure (5) that delimits a cavity (7) adapted to contain a heat accumulation liquid, said cavity (7) accommodating a heat exchanger (9) that can be supplied with a heat exchange fluid, ventilation means (15) being associated with said one or more heat accumulation elements (3),
**characterized in that** said enclosure (5)
has a first wall (11) that has a flat surface and a second wall (13), arranged opposite said first wall (11), that has an at least partially ribbed surface, said heat exchanger (9) having a U-shaped double tubular profile (90), the inner surface (92) of which, in contact with said heat exchange fluid, comprises a plurality of ribs, the U-shaped double tubular profile (90) comprising a flat structure (93), which connects, also thermally, the two portions, ascending and descending, of the tubular elements that define the U-shaped double tubular profile (90), said flat structure (93) having ends (95) that are adapted to be inserted into guides (94) that are provided in the inner surface of the enclosure (5), for the installation of the heat exchanger (9) inside the enclosure (5) of the heat accumulation element (3).

2. The apparatus for preserving, transporting and distributing refrigerated or frozen products (1) according to claim 1, **characterized in that** said enclosure (5) comprises a duct (17) for the passage of a heating fluid which is associated with one or both of said first wall (11) and said second wall (13).

3. The apparatus for preserving, transporting and distributing refrigerated or frozen products (1) according to claim 2, **characterized in that** the inner surface of said duct (17) for the passage of said heating fluid comprises a plurality of internal ribs (175) adapted to facilitate heat exchange between said heating fluid and the heat-conducting material of which said passage duct (17) is made.

4. The apparatus for preserving, transporting and distributing refrigerated or frozen products (1) according to one or more of the preceding claims, **characterized in that** said heat accumulation liquid is selected from the group that comprises:
- hydrogen peroxide at concentrations comprised between 1.5% and 6%;
- hydrogen peroxide at concentrations comprised between 25% and 35%;
- n-decane.

5. The apparatus for preserving, transporting and distributing refrigerated or frozen products (1) according to one or more of the preceding claims, **characterized in that** said enclosure (5) is made of aluminum.

6. The apparatus for preserving, transporting and distributing refrigerated or frozen products (1) according to one or more of the preceding claims, **characterized in that** said heat accumulation liquid is adapted to be cooled, in order to maintain a temperature of the internal space (112) of a compartment (100) of a refrigeration vehicle or the like which is lower than the temperature of the environment outside said compartment (100), by way of the enthalpy of fusion of said heat accumulation liquid, or to be heated, in order to maintain a temperature of the internal space (112) of said compartment (100) which is higher than the temperature of the environment outside said compartment (100), by way of the sensible heat of said heat accumulation liquid.

7. The apparatus for preserving, transporting and distributing refrigerated or frozen products (1) according to one or more of the preceding claims, **characterized in that** it comprises a temperature sensor (30) adapted to measure the temperature inside said compartment (100), the power of said ventilation means (15) being controllable as a function of said temperature inside said compartment (100).

8. The apparatus for preserving, transporting and distributing refrigerated or frozen products (1) according to one or more of the preceding claims, **characterized in that** said ventilation means (15) are adapted to deliver air streams with flow rates that can vary within a range from 0 to 12 meters per second.

9. The apparatus for preserving, transporting and distributing refrigerated or frozen products (1) according to one or more of the preceding claims, **characterized in that** said enclosure (5) of each one of said heat accumulation elements (3) comprises a venting valve adapted to release the overpressure generated inside said enclosure (5).

10. The apparatus for preserving, transporting and distributing refrigerated or frozen products (1) according to one or more of the preceding claims, **characterized in that** said enclosure (5) of each one of said heat accumulation elements (3) comprises at its top a hole (51), which can be closed, for the insertion and refilling of said heat accumulation liquid and, at the base, a manifold for the discharge of said heat accumulation liquid.

11. A compartment of a refrigerated transport vehicle (100), comprising an apparatus for preserving, transporting and distributing refrigerated or frozen products (1) according to one or more of the preceding claims, **characterized in that** said apparatus (1) is arranged adjacent to a back wall (102) of said compartment (100), spaced from said back wall (102), and raised from the walking surface (104) of said compartment (100), said ventilation means (15) being arranged at the top of said apparatus (1) proximate to the ceiling (106) of said compartment (100), said second wall (13) having an at least partially ribbed surface of said enclosure (5) being directed toward said back wall (102), said ventilation means (15) being adapted to generate an air flow (108) that passes between said walking surface (104) and said apparatus (1), enters the interspace (110) between said apparatus (1) and said back wall (102), flowing over said second wall (13), and passes through said ventilation means (15), distributing itself within said compartment (100).

12. The compartment of a refrigerated transport vehicle (100) according to claim 11, **characterized in that** said first wall (11) of said apparatus (1), which has a flat surface, is adapted to exchange heat by natural convection, said second wall (13), with an at least partially ribbed surface, instead being adapted to form with said back wall (102) of said compartment (100) a channel for the forced, modulated and controlled passage of a flow of air generated by said ventilation means (15).

## Patentansprüche

1. Eine Vorrichtung zum Konservieren, Transportieren und Verteilen gekühlter oder gefrorener Produkte (1), insbesondere für thermisch isolierte Abteilungen von Kühlfahrzeugen, Kühlkammern oder dergleichen, die eine oder mehrere Wärmespeicherelemente (3) umfasst, welche jeweils ein Gehäuse (5) umfassen, das einen Hohlraum (7) begrenzt, der ausgebildet ist, um eine Wärmespeicherflüssigkeit aufzunehmen, wobei der Hohlraum (7) einen Wärmetauscher (9) enthält, dem ein Wärmetauscherfluid zugeführt werden kann, wobei Belüftungsmittel (15) mit dem einen oder den mehreren Wärmespeicherelementen (3) verbunden sind;
**dadurch gekennzeichnet, dass** das Gehäuse (5) eine erste Wand (11) mit einer flachen Oberfläche und eine zweite Wand (13), der ersten Wand (11) gegenüber angeordnet, hat, die eine zumindest teilweise gerippte Oberfläche hat, wobei der Wärmetauscher (9) ein U-förmiges doppelröhrenförmiges Profil (90) hat, dessen Innenfläche (92), in Kontakt mit dem Wärmetauscherfluid, eine Vielzahl von Rippen hat, wobei das U-förmige doppelröhrenförmige Profil (90) eine flache Struktur (93) umfasst, welche, auch thermisch, die beiden aufsteigenden und absteigenden Abschnitte der röhrenförmigen Elemente verbindet, welche das U-förmige doppelröhrenförmige Profil (90) bestimmen, wobei die flache Struktur (93) Enden (95) hat, die ausgebildet sind, um in Führungen (94) eingeführt zu werden, die in der Innenfläche des Gehäuses (5) angebracht sind, zur Installation des Wärmetauschers (9) im Gehäuse (5) des Wärmespeicherelements (3).

2. Die Vorrichtung zum Konservieren, Transportieren und Verteilen gekühlter oder gefrorener Produkte (1) gemäß Anspruch 1, **dadurch gekennzeichnet, dass** das Gehäuse (5) eine Leitung (17) für den Durchlauf eines Wärmefluids umfasst, die mit der ersten Wand (11) und/oder der zweiten Wand (13) verbunden ist.

3. Die Vorrichtung zum Konservieren, Transportieren und Verteilen gekühlter oder gefrorener Produkte (1) gemäß Anspruch 2, **dadurch gekennzeichnet, dass** die Innenfläche der Leitung (17) für den Durchlauf des Wärmefluids eine Vielzahl innerer Rippen (175) umfasst, ausgebildet, um den Wärmeaustausch zwischen dem Wärmefluid und dem wärmeleitenden Material, aus dem die Durchlaufleitung (17) besteht, zu erleichtern.

4. Die Vorrichtung zum Konservieren, Transportieren und Verteilen gekühlter oder gefrorener Produkte (1) gemäß einem oder mehreren der obigen Ansprüche, **dadurch gekennzeichnet, dass** die Wärmespeicherflüssigkeit gewählt ist aus der Gruppe, die Folgendes umfasst:
- Wasserstoffperoxid in Konzentrationen zwischen 1,5% und 6%,
- Wasserstoffperoxid in Konzentrationen zwischen 25% und 35%,
- n-Decan.

5. Die Vorrichtung zum Konservieren, Transportieren und Verteilen gekühlter oder gefrorener Produkte (1) gemäß einem oder mehreren der obigen Ansprüche, **dadurch gekennzeichnet, dass** das Gehäuse (5) aus Aluminium besteht.

6. Die Vorrichtung zum Konservieren, Transportieren und Verteilen gekühlter oder gefrorener Produkte (1) gemäß einem oder mehreren der obigen Ansprüche, **dadurch gekennzeichnet, dass** die Wärmespeicherflüssigkeit ausgebildet ist, um gekühlt zu werden, um durch die Schmelzenthalpie der Wärmespeicherflüssigkeit eine Temperatur des Innenraums (112) eines Abteils (100) eines Kühlfahrzeugs oder dergleichen aufrechtzuerhalten, die niedriger ist als die Temperatur der Umgebung außerhalb des Abteils (100); oder um erhitzt zu werden, um durch die fühlbare Wärme der Wärmespeicherflüssigkeit eine Temperatur des Innenraums (112) des Abteils (100) aufrechtzuerhalten, die höher ist als die Temperatur der Umgebung außerhalb des Abteils (100).

7. Die Vorrichtung zum Konservieren, Transportieren und Verteilen gekühlter oder gefrorener Produkte (1) gemäß einem oder mehreren der obigen Ansprüche, **dadurch gekennzeichnet, dass** sie einen Temperatursensor (30) umfasst, ausgebildet, um die Temperatur innerhalb des Abteils (100) zu messen, wobei die Leistung der Belüftungsmittel (15) als Funktion der Temperatur innerhalb des Abteils (100) steuerbar ist.

8. Die Vorrichtung zum Konservieren, Transportieren und Verteilen gekühlter oder gefrorener Produkte (1) gemäß einem oder mehreren der obigen Ansprüche, **dadurch gekennzeichnet, dass** die Belüftungsmittel (15) ausgebildet sind, um Luftströme mit Strömungsraten abzugeben, die in einem Bereich von 0 bis 12 Metern pro Sekunde variieren können.

9. Die Vorrichtung zum Konservieren, Transportieren und Verteilen gekühlter oder gefrorener Produkte (1) gemäß einem oder mehreren der obigen Ansprüche, **dadurch gekennzeichnet, dass** das Gehäuse (5) jedes der Wärmespeicherelemente (3) ein Belüftungsventil umfasst, ausgebildet, um den Überdruck abzulassen, der in dem Gehäuse (5) erzeugt wird.

10. Die Vorrichtung zum Konservieren, Transportieren und Verteilen gekühlter oder gefrorener Produkte (1) gemäß einem oder mehreren der obigen Ansprüche; **dadurch gekennzeichnet, dass** das Gehäuse (5) jedes der Wärmespeicherelemente (3) an seinem oberen Ende ein Loch (51) umfasst, das verschlossen werden kann, zum Hineingeben und Auffüllen der Wärmespeicherflüssigkeit, und an der Basis einen Verteiler zum Ablassen der Wärmespeicherflüssigkeit.

11. Ein Abteil eines gekühlten Transportfahrzeugs (100), das eine Vorrichtung zum Konservieren, Transportieren und Verteilen gekühlter oder gefrorener Produkte (1) gemäß einem oder mehreren der obigen Ansprüche umfasst; **dadurch gekennzeichnet, dass** die Vorrichtung (1) angrenzend an eine Rückwand (102) des Abteils (100), von der Rückwand (102) beabstandet und gegenüber der Lauffläche (104) des Abteils (100) erhöht, angeordnet ist; wobei die Belüftungsmittel (15) am oberen Ende der Vorrichtung (1), in der Nähe der Decke (106) des Abteils (100), angeordnet sind, wobei die zweite Wand (13), die eine zumindest teilweise gerippte Oberfläche des Gehäuses (5) hat, der Rückwand (102) zugewandt ist, wobei die Belüftungsmittel (15) ausgebildet sind, um einen Luftstrom (108) zu erzeugen, der zwischen der Lauffläche (104) und der Vorrichtung (1) hindurchgeht, in den Zwischenraum (110) zwischen der Vorrichtung (1) und der Rückwand (102) eintritt, über die zweite Wand (13) strömt, die Belüftungsmittel (15) durchdringt und sich in dem Abteil (100) verteilt.

12. Das Abteil eines gekühlten Transportfahrzeugs (100) gemäß Anspruch 11, **dadurch gekennzeichnet, dass** die erste Wand (11) der Vorrichtung (1), die eine flache Oberfläche hat, ausgebildet ist, um Wärme durch Eigenkonvektion auszutauschen, während die zweite Wand (13), mit einer zumindest teilweise gerippten Oberfläche, ausgebildet ist, um mit der Rückwand (102) des Abteils (100) einen Kanal für den erzwungenen, modulierten und kontrollierten Durchlass eines Luftstroms zu bilden, der von den Belüftungsmitteln (15) erzeugt wird.

## Revendications

1. Dispositif de préservation, de transport et de distribution de produits réfrigérés ou surgelés (1), particulièrement pour des compartiments isolés thermiquement de véhicules de réfrigération, de chambres de réfrigération ou analogue, comprenant un ou plusieurs éléments d'accumulation de chaleur (3), chacun comprenant une enceinte (5) qui délimite une cavité (7) adaptée pour contenir un liquide d'accumulation de chaleur, ladite cavité (7) accueillant un échangeur de chaleur (9) qui peut être alimenté avec un fluide d'échange de chaleur, des moyens de ventilation (15) étant associés avec lesdits un ou plusieurs éléments d'accumulation de chaleur (3),
**caractérisé en ce que** ladite enceinte (5) comporte une première paroi (11) qui a une surface plate et une seconde paroi (13), agencée opposée à ladite première paroi (11), qui a une surface en partie cannelée, ledit échangeur de chaleur (9) ayant un profil tubulaire double en forme de U (90), dont la surface intérieure (92), en contact avec le fluide d'échange de chaleur, comprend une pluralité de nervures, le profil tubulaire double forme de U (90) comprenant une structure plate (93), qui connecte, aussi thermiquement, les deux parties, ascendante et descendante, des éléments tubulaires qui définissent le profil tubulaire double en forme de U (90), ladite structure plate (93) ayant des extrémités (95) qui sont adaptées pour être insérées dans des guides (94) qui sont placés dans la surface intérieure de l'enceinte (5), pour l'installation de l'échangeur de chaleur (9) à l'intérieur de l'enceinte (5) de l'élément d'accumulation de chaleur (3).

2. Dispositif de préservation, de transport et de distribution de produits réfrigérés ou surgelés (1) selon la revendication 1, **caractérisé en ce que** ladite enceinte (5) comprend un conduit (17) pour le passage d'une fluide chauffant qui est associé à une ou deux de ladite première paroi (11) et de ladite seconde paroi (13).

3. Dispositif de préservation, de transport et de distribution de produits réfrigérés ou surgelés (1) selon la revendication 2, **caractérisé en ce que** la surface intérieure dudit conduit (17) pour le passage dudit fluide chauffant comprend une pluralité de nervures intérieures (175) adaptées pour faciliter l'échange de chaleur entre ledit fluide chauffant et le matériau conducteur de chaleur dont ledit conduit (17) de passage est fait.

4. Dispositif de préservation, de transport et de distribution de produits réfrigérés ou surgelés (1) selon une ou plusieurs des revendications précédentes, **caractérisé en ce que** ledit liquide d'accumulation de chaleur est sélectionné dans le groupe qui comprend :
du peroxyde d'hydrogène à des concentrations comprises entre 1,5% et 6% ;
du peroxyde d'hydrogène à des concentrations comprises entre 25% et 35% ;
du n-décane.

5. Dispositif de préservation, de transport et de distribution de produits réfrigérés ou surgelés (1) selon une ou plusieurs des revendications précédentes, **caractérisé en ce que** ladite enceinte (5) est faite d'aluminium.

6. Dispositif de préservation, de transport et de distribution de produits réfrigérés ou surgelés (1) selon une ou plusieurs des revendications précédentes, **caractérisé en ce que** ledit liquide d'accumulation de chaleur est adapté pour être refroidi, afin de maintenir une température de l'espace interne (112) d'un compartiment (100) d'un véhicule de réfrigération ou analogue qui est inférieure à la température de l'environnement à l'extérieur dudit compartiment (100), au moyen de l'enthalpie de fusion dudit liquide d'accumulation de chaleur, ou pour être chauffé, afin de maintenir une température de l'espace interne (112) dudit compartiment (100) qui est supérieure à la température de l'environnement à l'extérieur dudit compartiment (100), au moyen de la chaleur sensible dudit liquide d'accumulation de chaleur.

7. Dispositif de préservation, de transport et de distribution de produits réfrigérés ou surgelés (1) selon une ou plusieurs des revendications précédentes, **caractérisé en ce qu'**il comprend un capteur de température (30) adapté pour mesurer la température à l'intérieur dudit compartiment (100), la puissance desdits moyens de ventilation (15) pouvant être commandée en fonction de ladite température à l'intérieur dudit compartiment (100).

8. Dispositif de préservation, de transport et de distribution de produits réfrigérés ou surgelés (1) selon une ou plusieurs des revendications précédentes, **caractérisé en ce que** lesdits moyens de ventilation (15) sont adaptés pour délivrer des flux d'air avec des débits qui peuvent varier dans une plage de 0 à 12 mètres par seconde.

9. Dispositif de préservation, de transport et de distribution de produits réfrigérés ou surgelés (1) selon une ou plusieurs des revendications précédentes, **caractérisé en ce que** ladite enceinte (5) de chacun desdits éléments d'accumulation de chaleur (3) comprend une soupape de ventilation adaptée pour libérer la surpression générée à l'intérieur de ladite enceinte (5).

10. Dispositif de préservation, de transport et de distribution de produits réfrigérés ou surgelés (1) selon une ou plusieurs des revendications précédentes, **caractérisé en ce que** ladite enceinte (5) de chacun desdits éléments d'accumulation de chaleur (3) comprend à son sommet un trou (51), qui peut être fermé, pour l'insertion et le remplissage dudit liquide d'accumulation de chaleur et, à la base, un distributeur pour le vidage dudit liquide d'accumulation de chaleur.

11. Compartiment d'un véhicule de transport réfrigéré (100), comprenant un dispositif de préservation, de transport et de distribution de produits réfrigérés ou surgelés (1) selon une ou plusieurs des revendications précédentes, **caractérisé en ce que** ledit dispositif (1) est agencé au voisinage d'une paroi arrière (102) dudit compartiment (100), espacé de ladite paroi arrière (102), et surélevé depuis la surface de marche (104) dudit compartiment (100), lesdits moyens de ventilation (15) étant agencés au sommet dudit dispositif à proximité du plafond (106) dudit compartiment (100), ladite seconde paroi (13) ayant une surface au moins en partie cannelée de ladite enceinte (5) étant dirigée vers ladite paroi arrière (102), lesdits moyens de ventilation (15) étant adaptés pour générer un courant d'air (108) qui passe entre ladite surface de marche (104) et ledit dispositif (1), entre dans l'intervalle (110) entre ledit dispositif (1) et ladite paroi arrière (102), s'écoulant sur ladite seconde paroi (13), et passe à travers lesdits moyens de ventilation (15), se distribuant lui-même dans ledit compartiment (100).

12. Compartiment d'un véhicule de transport réfrigéré (100) selon la revendication 11, **caractérisé en ce que** ladite première paroi (11) dudit dispositif (1), qui a une surface plate, est adaptée pour échanger de la chaleur par convection naturelle, ladite seconde paroi (13), avec une surface au moins en partie cannelée, étant plutôt adaptée pour former avec ladite paroi arrière (102) dudit compartiment (100) un canal pour le passage forcé, modulé et commandé d'un courant d'air généré par lesdits moyens de ventilation (15).
